# EUROPEAN PATENT SPECIFICATION

(11) **EP 0 580 586 B1**
(45) Date of publication and mention of the grant of the patent: **12.02.1997**
(21) Application number: 92903401.5
(22) Date of filing: 19.12.1991
(51) Int. Cl.: B29C 43/02, B29C 70/00

(54) **PROCESS FOR THE MANUFACTURE OF A CARBON FIBRE REINFORCED ARTICLE FROM A MASTER MODEL**
VERFAHREN ZUR HERSTELLUNG VON KOHLEFASERVERSTÄRKTEN GEGENSTÄNDEN AUS EINEM URMODEL
PROCEDE DE FABRICATION D'UN ARTICLE RENFORCE EN FIBRES DE CARBONE A PARTIR D'UN MODELE-MAITRE

(43) Date of publication of application: 02.02.1994
(73) Proprietor: MOZER, Rudolf W., Bloomfield Hills, MI 48304 (US)
(72) Inventor: MOZER, Rudolf W., Bloomfield Hills, MI 48304 (US)
(74) Representative: Baillie, Iain Cameron
(86) International application number: US9109636
(87) International publication number: WO9311922

(56) References cited:
- GB-A- 2 243 107
- Patent Abstracts of Japan, Vol 10, No 333, M534, abstract of JP 61-137712, publ 1986-06-25 (SUMITOMO BAKELITE CO LTD)
- Patent Abstracts of Japan, Vol 12, No 190, M704, abstract of JP 62-297123, publ 1987-12-24 (SUMITOMO CHEM CO LTD)
- Patent Abstracts of Japan, Vol 9, No 300, M433, abstract of JP 60-139432, publ 1985-07-24 (TOSHIBA K.K.)

## Description

### BACKGROUND OF THE INVENTION

### 1. Field of the Invention

This invention pertains generally to producing facsimiles of physical objects, and more particularly to production of a facsimile with uniform wall thickness and surface topography which matches that of a production stage component.

In the automotive and other industries, models are commonly used prior to the development of production prototypes. In the development process for a new product, however, there is a need for dimensionally accurate facsimiles of proposed production stage components well in advance of the actual production stage.

### 2. Description of the Background Art

For several decades the automotive industry, as well as the aircraft and boat building industry, has used laminated composite shapes, skins or components constructed of glass fiber cloth bonded with either a polyester, epoxy or urethane matrix. These composites are widely used in boat hulls, racing cars, tooling aids, mockups, aircraft components, and the like.

As a result of the foregoing applications, advanced fibers and cloths made from carbon, graphite or aramid materials began to appear in the marketplace, where they found further use in highly-stressed, critical aircraft components, usually in the form of pre-pregnated cloths which were then cured under heat and pressure in autoclaves. Other early applications of these advanced fiber materials were partial or complete shells of racing cars, boats and airplanes.

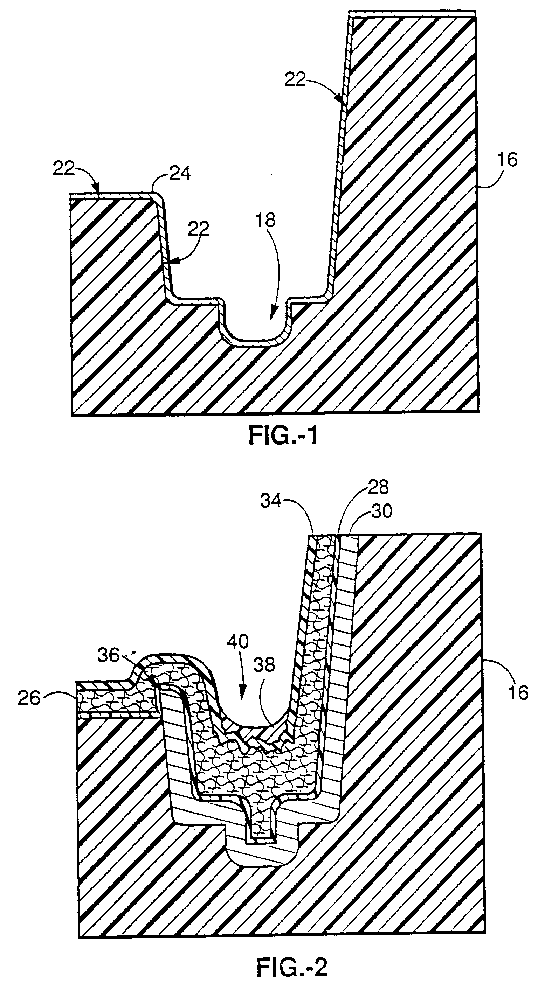

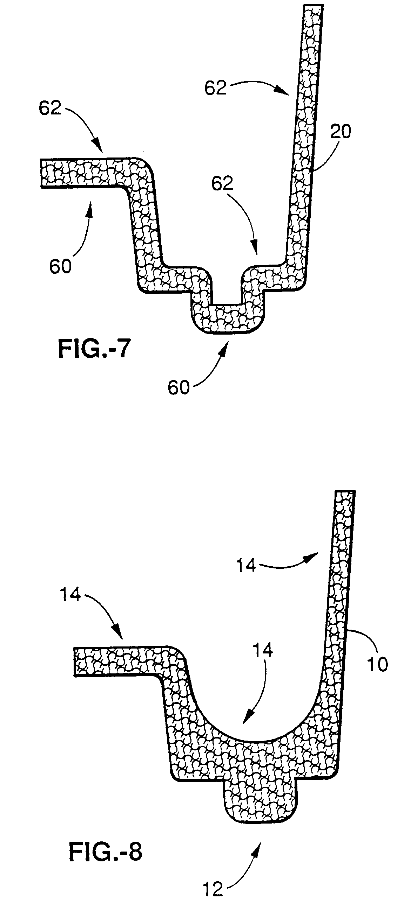

It is well known that pre-production facsimiles for those types of applications can be produced from carbon fiber materials by making a master model, forming a single or multi-layer skin over the surface of the master model, impregnating the skin with epoxy, and curing the skin while heat and pressure is applied to the side of the skin which does not contact the master model. As shown in FIG. 8, however, conventional processing techniques produce facsimiles which are dimensionally accurate with respect to one surface only. Facsimile 10 represents a facsimile produced using conventional techniques. Lower surface 12 represents the front side of a facsimile 10 which was fabricated from a master model identical to master model 16 shown in FIG. 1. Surface 12 is the surface of facsimile 10 which was immediately adjacent to the surface 22 of master model 16 and, as can be seen, complements the surface topography of master model 16. Upper surface 14 represents the back side of facsimile 10 to which pressure was applied. Note that the topography of surface 14 does not conform to the shape of surface 12 and that facsimile 10 does not exhibit uniform wall thickness.

For certain applications, these conventional techniques are suitable. However, in critical applications such as those where it is necessary to develop prototypes which have dimensionally accurate external and internal surfaces, conventional techniques fail.

For example, in developing a prototype of an automobile, it is desirable to simulate the complete outer body assembly as well as a complete inner chassis assembly and to coordinate the fitting of parts. This requires dimensionally accurate facsimiles of the actual sheet metal parts that will be used in the production stage. Because conventional techniques are suitable for making facsimiles of only one surface of a model, considerable time is required to shape and fit the facsimiles of the inner chassis components. Conventional techniques are not capable of producing dimensionally accurate facsimiles of components which duplicate the shape of both surfaces, as well as the wall thickness, of the final component.

The reason that conventional techniques for making facsimiles from these materials fail can be seen by referring again to FIG. 1. In areas of a female radius or "fillet" 18 of a master model 16, when a laminate skin is compressed into fillet 18, instead of producing a facsimile which has a uniform wall thickness as desired to duplicate the production component, the area around fillet 18 will be sometimes double the desired metal thickness or more. Conventional facsimile techniques do not employ means to shape and conform the back side of the laminate skin to the surface topography of the master model before pressure is applied. Due to these resultant non-conformities and irregularities, especially in the fillet areas, these parts do not have uniform wall thickness and lack suitable precision to make dimensionally accurate simulations of automotive assemblies.

Information on similar processes is provided in the following:
Document JP-A-61-137712 discusses a method wherein fiber reinforcing material impregnated with thermosetting resin is heated under pressure and cured in a forming mold.
Document GB-A-2 243 107 (1) speaks of a method to make a resin impregnated fiber composite using a master pattern and wax to make a female mold; the female mold and master pattern are then used to make composites.
Document JP-A-62-297123 elaborates on a method of feeding a fabric between upper and lower platens of a mold and then before completely closing the mold, injecting a fluxed thermoplastic resin into the cavity through an aperture in the lower mold; the upper mold having a rugged pattern to hold the fabric in place.
Document JP-A-60-139432 discloses a method to obtain a product of high strength while maintaining an even thickness by using a mold with the male and female dies covered with an elastomer.

### SUMMARY OF THE INVENTION

This invention is a process for producing resin-impregnated fibrous material facsimiles of a substantially uniform wall thickness, of physical objects, the process comprising the steps of:
(a) forming a master model having a surface topography to duplicated or a complement of said surface topography;
(b) forming a pressure pad on said master model, said pressure pad having a first side and a second side, said first side having surface topography substantially complementing said surface topography of said master model, said second side having surface topography for substantially uniform transmittal of pressure from said second side to said first side;
(c) removing said pressure pad from said master model;
(d) placing a fibrous material over said surface topography of said master model;
(e) impregnating said fibrous material with a thermosetting resin;
(f) placing said first side of said pressure pad over said fibrous material;
(g) applying pressure to said second side of said pressure pad;
(h) curing said resin-impregnated fibrous material; and
(i) removing a facsimile from the surface of said master model, said facsimile having a substantially uniform wall thickness.

Further embodiments of the invention are disclosed in the dependent claims.

The present invention pertains to a process for producing a dimensionally accurate carbon fiber facsimile of a production stage component, typically a sheet metal or plastic component. The carbon fiber facsimile produced by the present invention is a dimensionally accurate reproduction of that component and will have uniform wall thickness as well as a degree of rigidity equal to or greater than that of the actual production part.

Facsimiles produced by the present invention are particularly useful for simulation of sheet metal and plastic parts used in the construction of automobile inner chassis and outer body assemblies.

By way of example and not of limitation, the process of the present invention generally begins with the preparation of a pressure pad which is used to provide back-side definition to the facsimile produced. To prepare the pressure pad, a parting agent is applied to the surface area of a dimensionally approved master model to be duplicated. In the preferred embodiment, a surface coat of epoxy is then applied to the surface of the master model, several layers of fiberglass weave skin are laminated over the surface of the master model with coats of epoxy applied between the layers, a final coat of epoxy is applied to the upper surface of the layers of fiberglass weave skin, and the laminated material is cured. In an alternative embodiment, the pressure pad is molded from the recessed areas (fillets) of the master model after first applying a layer of sheet wax equal in thickness to the thickness of the facsimile to be produced. Using either alternative, the pressure pad is removed from the master model when the curing process is complete.

The front side of the pressure pad will have a surface topography which substantially complements the surface topography of the master model to be duplicated. When the sheet wax alternative is employed, the front side of the pressure pad complements the surface topography of the master model except to the extent that it was displaced from the actual surface of the master model by the layer of sheet wax, since the layer of sheet wax has is same thickness as the facsimile to be produced.

Once the pressure pad is cured, the back side of the pressure pad is then adapted by filling and rounding out any recesses that exist so as to leave only shallow gently curved areas of female radii, or fillets. This filling and rounding out of the recesses in the back side of the pressure pad is a critical step in the entire process because it permits pressure applied to the back side of the pressure pad to be uniformly transmitted to the front side of the pressure pad, and is a step required to overcome the failures of conventional facsimile techniques. All sharp and deep recesses in the back side of the pressure pad are eliminated in this manner. Additionally, where the pressure pad prepared by the earlier steps is a continuous hardened fiberglass skin, the skin is cut into separate members or, alternatively, holes or slots are cut in the skin for excess epoxy to flow through. Where the pressure pad was formed from only the fillet areas of the master model, sheets of wax or laminate strips are used as pad members to cover the remaining surface areas of the master model.

After preparation of the pressure pad is complete, the master model is cleaned and coated with a parting agent. A coating of epoxy is then brushed on over the parting agent, and sheets of woven material made from carbon fiber, fiberglass, Kevlar, or a combination of thereof, are placed over the epoxy, using a sufficient number of layers to achieve the desired wall thickness of the facsimile to be fabricated. Preferably the woven material is made from carbon fiber. The sheets of carbon fiber material are laminated by coating them with epoxy. Other thermosetting resins such as polyester could be used, but epoxy is recommended for providing the best stability.

The pressure pad is then coated with a parting agent and placed over the epoxy impregnated carbon fiber material, the pad members being separated or slotted so as to leave gaps through which excess epoxy can flow.

Next, a breather cloth which will absorb excess epoxy is placed over the pressure pad. Then a deformable rubber or plastic membrane is placed over the breather cloth. Pressure is then applied over the entire surface of the deformable membrane and the material is cured. Use of subatmospheric pressure (vacuum) is preferred, but the pressure can also be positive atmospheric pressure or physically applied with a clamping means.

After curing is complete, the deformable membrane, breather cloth and pressure pad are stripped off, the carbon fiber facsimile is removed from the master model, and the edges are trimmed as necessary.

Significantly, the backside definition which results from use of a pressure pad produces a facsimile which has a uniform wall thickness. As a result of filling in and rounding out the recesses in the back side of the pressure pad, when pressure is applied the deformable membrane stretches into and presses against the entire back surface of the pressure pad. Because the front side of the pressure pad had a surface topography substantially complementing the surface topography of the master model, the back side of the facsimile will have similar definition. The resultant product is a dimensionally accurate carbon fiber facsimile of the production component.

Industry applications for the process are widespread, particularly in the automotive industry. Automotive inner and outer chassis applications include proof out of manual and computer aided design details, coordination of assemblies before fabrication of prototype and production tools, matching of connecting and/or mounting flanges, elimination of design interference, center of gravity determinations of assemblies, torsional rigidity studies, packaging studies of assemblies, early coordination of welding machines and fixtures, assistance and coordination of robotics and transfer machines, and correlation aids for checking fixtures. Automotive interior applications include proof out of manual and computer aided design details, complete interior environmental quality fixtures (macrobucs), correlation aids for process gauges, pre-prototype assemblies, and interiors for clinic cars.

A desire in creating this invention is to produce facsimiles which duplicate surface topography and wall thickness to within 0.2 millimeters, which is the standard tolerance for models.

A further desire in creating this invention is to produce facsimiles which are dimensionally accurate both front and back.

A further desire in creating this invention is to produce facsimiles which have uniform wall thickness.

A further desire in creating this invention is to produce facsimiles which identically duplicate production components.

A further desire in creating this invention is to produce facsimiles with rigidity equal to or greater than that of the actual production part under ambient temperatures prevailing during tooling and assembly.

A further desire in creating this invention is to achieve repeatability in properties such as rigidity and specific weight.

A further desire in creating this invention is to produce facsimiles from which factored correlations in dimension and strength can be made to final production parts and assemblies.

A further desire in creating this invention is to reduce the time and cost associated with coordination and adjustment of components in prototype structures.

Further advantages of the invention will be brought out in the following portions of the specification, wherein the detailed description is for the purpose of fully disclosing preferred embodiments of the invention without placing limitations thereon.

### BRIEF DESCRIPTION OF THE DRAWINGS

The invention will be more fully understood by reference to the following drawings which are for illustrative purposes only:
FIG. 1 is a cross-sectional view of a master model used in the process of the present invention.
FIG. 2 is a cross-sectional view of the lay-up resulting from the steps employed to prepare a pressure pad from the master model shown in FIG. 1.
FIG. 3 is a cross-sectional view of the pressure pad of FIG. 2 showing multiple layers of woven pressure pad material.
FIG. 4 is a cross-sectional view of the lay-up resulting from the steps employed to prepare a carbon fiber facsimile using the master model shown in FIG. 1 and the pressure pad shown in FIG. 3.
FIG. 5 is a cross-sectional view of the carbon fiber facsimile of FIG. 4 showing multiple layers of woven facsimile material.
FIG. 6 is an exploded view of FIG. 4.
FIG. 7 is a cross-sectional view of an exemplary carbon fiber facsimile produced from the master model shown in FIG. 1 using the process of the present invention.
FIG. 8 is a cross-sectional view of an exemplary carbon fiber facsimile produced from the master model shown in FIG. 1 using conventional means.

### DESCRIPTION OF THE PREFERRED EMBODIMENTS

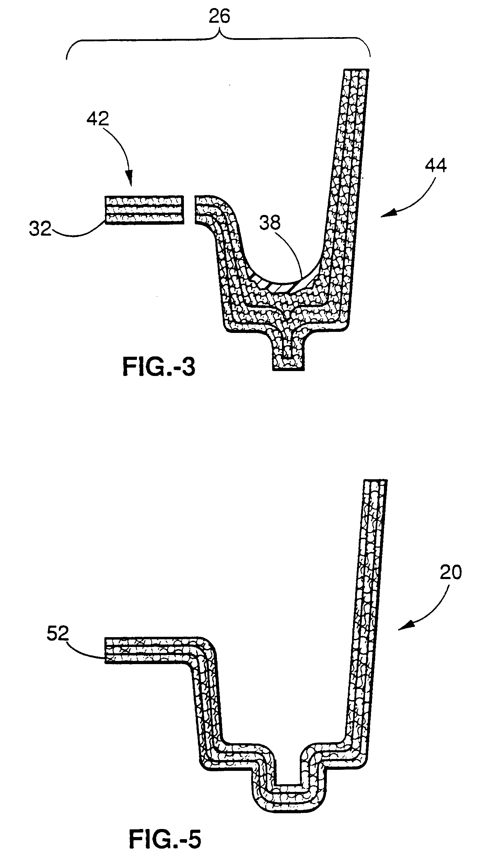

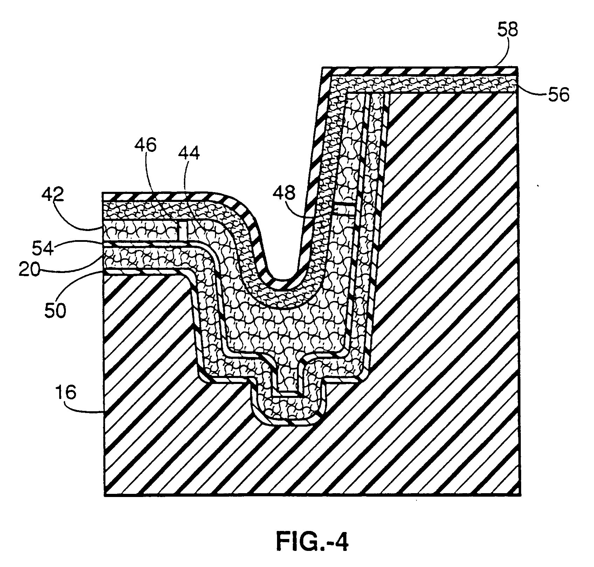

For illustrative purposes the present invention can be understood with reference to specification herein and the drawings of FIG. 1 through FIG. 7. It will be appreciated that the process may vary as to configuration and as to details of the steps without departing from the basic concepts as disclosed herein.

Referring to FIG. 1, the process begins with the preparation of a dimensionally accurate master model 16 from which facsimile 20 shown in FIG. 7 will be produced. Master model 16 will have a surface topography 22 which is complementary to one surface of the facsimile to be produced. Master model 16 is called a "negative master" since the facsimile produced fits within master model 16. If a mirror image of master model 16 was used instead, then the master model would be a "positive master." The selection of a positive or negative master model depends primarily on the shape of the facsimile to be produced and whether the surface topography of the master model is to represent the inside or outside of the production stage component.

Master model 16 can be fashioned satisfactorily from a number of materials. Examples are solid wood, laminated wood, epoxy or urethane model plank such as CibaGeigy Corporation "Oreol", epoxy/fiberglass laminations, epoxy/carbon laminations, plaster casts, solid metal, spray metal, fiberglass reinforced or unreinforced cardboard models, or high density urethane, styrene, or acryl foam. Because the process of the present invention requires application of pressure to master model 16, the material from which master model 16 must be constructed to retain the required dimensional accuracy and not fatigue under pressure. The best suited material is model plank which is in common use in the industry.

Because the process of the present invention uses thermosetting resins which will adhere to surface 22 of master model 16, to prevent adhesion of these thermosetting resins it is desirable to apply a parting agent 24 to surface 22 of master model 16, as well as to the surface of any reusable component which will be in contact with thermosetting resin. Examples of acceptable compounds for parting agent 24 are polyvinyl alcohol or silicone in combination with wax. To apply parting agent 24, the wax is spread over the surface to be prepared and then the waxed surface is buffed. A film of polyvinyl alcohol or silicone is then sprayed over the wax and allowed to dry. The parting agent will then prevent adhesion of the thermosetting resins to the treated surface. Alternatively, the components used in the present invention could be made of materials which do not adhere to the thermosetting resin.

Referring now to FIG. 1, FIG. 2, and FIG. 3 together, the next step is to prepare pressure pad 26. In many applications, pressure pad 26 can be formed directly from surface 22 of master model 16 as a continuous skin. In other applications, preparation of pressure pad 26 requires intermediate steps in the process.

For a complicated surface topography, such as shown in master model 16, the forming of a pressure pad 26 directly from surface 22 of master model 16 would produce a pressure pad which would not fit into place after the material from which the facsimile will be fabricated is later applied to master model 16. This problem occurs when vertical or near vertical walls are adjacent to recessed areas such as those adjacent to fillet 18.

Therefore, for preparing pressure pad 26 from a complicated topography as shown, the first step is to place a layer of sheet wax 30 over the recessed portions of surface 22 of master model 16 as shown. The thickness of sheet wax 30 should be the same as that of the facsimile to be produced in order to produce a proper fit. An example of suitable sheet wax is Master Brand available from Kondt-Collins Co.

A coat of parting agent 24 is then applied to the surface of the sheet wax 30 and the remaining portions of surface 22 not covered by sheet wax 30 to prevent adhesion of thermosetting resin to those surfaces. A surface coat of thermosetting resin 28 is then applied over the coat of parting agent.

Layers of woven fiberglass or carbon fiber pad material 32, or the like, are then laminated over the surface coat of thermosetting resin to form pressure pad 26. Woven material is used so that the thermosetting resin will penetrate the material between the weaves and form a matrix. Typically three to four layers of 0.3 millimeter thick woven fiberglass material or the like, with coats of thermosetting resin applied between the layers, are used to form the continuous laminated skin that will become pressure pad 26. A final coat of thermosetting resin 34 is then applied over the top layer of woven material, and the layers of laminated woven material are pressed into place over the surface of the master model. The thermosetting resin is then cured and the pressure pad is removed from the master model.

Note that a discontinuity in pressure pad 26 is created at break point 36 because sheet wax 30 was not applied over a portion of surface 22. Despite this discontinuity, pressure pad 26 is still formed in a continuous piece by bending the layers of woven pad material 32 downward around break point 36.

When a pressure pad is to be formed directly from the surface of a master model, the use of sheet wax 30 can be omitted. A layer of parting agent is applied to the entire surface of the master model before applying a surface coat of thermosetting resin, and the layers of woven fiberglass or carbon fiber material are laminated in place as generally described above. These steps are generally suitable for preparation of a pressure pad where the surface topography of the master model does not contain vertical or near vertical walls adjacent to recessed areas.

Alternatively, a pressure pad could be formed by molding the woven fiberglass or carbon fiber material only into recessed areas such as fillet 18 and immediately adjacent areas, and using sheet wax as the remaining portions of the pressure pad.

Because pressure pad 26 is formed from master model 16 in this manner, the lower or front surface of pressure pad 26 will have a topography which is substantially complementary to the topography of surface 22, except to the extent that it was displaced from surface 22 by sheet wax 30. Where the use of sheet wax 30 is not required, the front surface of pressure pad 26 will be an identical reverse image of surface 22 of master model 16. It is critical in the process that the topography of one surface of pressure pad 26 substantially complement the topography of surface 22 of master model 16.

The next step is to adapt the upper or back surface of pressure pad 26 so that pressure applied to the back surface will be uniformly distributed to its lower or front surface. This is done by filling in and rounding any depressions 38 on the back surface of pressure pad 26 with epoxy or the like so as to create a relatively shallow fillet 40 with gentle curves as shown. Pressure pad 26 is then removed from master model 16 and separated into pad members 42, 44 by making a vertical cut or otherwise detaching pad members 42, 44 at or near break point 36. Separation of these pad members is unnecessary when the pressure pad is formed directly from the surface of the master model. Pressure pad 26 is now ready to use.

Referring now to FIG. 1, FIG. 4, and FIG. 5, surface 22 of master model 16 is then cleaned and a coat of parting agent 24 applied to surface 22 as before to prevent adhesion of thermosetting resin. Next, a surface coat of thermosetting resin 50 is applied over the coat of parting agent.

Layers of woven facsimile material 52 are then laminated over the surface coat of thermosetting resin with coats of thermosetting resin applied between the layers, to form the continuous laminated skin that will become facsimile 20. Woven material is used so that the thermosetting resin will penetrate the material between the weaves and form a matrix.

The woven facsimile material 52 can be sheets of glass fiber, carbon fiber, aramid fiber, Dupont's Kevlar fibers, and the like, or any combination of those materials. The weave can be unidirectional or bidirectional, but must be open so as to permit the thermosetting resin to form a matrix. The number of layers of woven facsimile material 52 used is determined by the wall thickness of the facsimile to be produced, the wall thickness being the same as the production stage component. Suitable facsimile material employing graphite or carbon fibers is available from numerous commercial sources, such as Hercules, Morganite, Stackpole, Union Carbide, and others. Textile Technology produces a particularly suitable graphite cloth with an open weave under the designation Yarn 3K #G104. Essentially any advanced exotic, synthetic or natural fiber suitable for impregnation and bonding by a thermosetting single or multicomponent matrix could be used for facsimile material 52.

After facsimile material 52 is in place, a final coat of thermosetting resin 54 is applied over the top layer of facsimile material 52. The surfaces of pressure pad 26 are then coated with the same parting agent as was applied to surface 22 of master model 16. Pressure pad 26 is then pressed into place over facsimile material 52 leaving gap 46 between pad members 42, 44. Gap 46 is important so that excess thermosetting resin can escape through the opening created thereby when pressure is applied. Note that pressure pad 26 can alternatively be cut into strips, or holes or slots 48 can be cut into pressure pad 26 at other locations so that excess thermosetting resin can escape if necessary. Note also that, instead of using pad member 42, a strip of sheet wax could be used in its place. As described earlier, sheet wax is also a suitable pressure pad material, particularly in relatively horizontal areas.

Next, breather cloth 56 which is a conventional cloth material or teflon-coated glass cloth capable of absorbing excess thermosetting resin is placed over pressure pad 26. Deformable rubber membrane 58 is then placed over breather cloth 56. The deformation characteristics of rubber membrane 56 are not critical so long as it stretches easily and will not rupture under pressure or vacuum. Deformable plastic could also be used instead of rubber.

Once all of the layers are in place, the nested assembly is subjected to pressure and the resin impregnated facsimile material 52 is cured to form facsimile 20. During the curing process, thermosetting resin penetrates the weave in facsimile material 52 and hardens. In the preferred embodiment, the pressure is subatmospheric (e.g., vacuum at approximately thirty inches mercury) and can be applied in a vacuum chamber or conventional vacuum bag. Clamping pressure or positive atmospheric pressure can also be satisfactorily used.

With regard to clamping pressure, such pressure could be applied by any conventional clamping means and is particularly desirable for use in connection with molds prepared to produce three-dimensionally complex parts. When producing such parts, an alternative to using a pressure pad would be to prepare a conventional mold having top, bottom and side cavities. Facsimiles can be produced using the same laminates as described herein, and pressure could be applied by clamping together the cavities of the mold.

The thermosetting resin used to laminate facsimile material 52, as well as to laminate pad material 32, can be from the family of liquid polymers and liquified polymers, and includes epoxy, urethane, and polyester. A typical thermosetting epoxy resin is WB 400 available from Resin Services and can be used with the WH 150 hardener (catalyst) available from the same source. Another suitable epoxy is available from CibaGeigy Corporation as MY-720. Other thermosetting matrices such as metton, modar, or any other matrix from the family of liquid polymers and liquified polymers capable of penetrating, or whetting, facsimile material 52, and which will subsequently cure to a hardened or semi-hardened state, would also be suitable.

To assist in curing, heat as well as pressure can be applied by means of an autoclave. However, in the preferred embodiment, external heat is not required because the thermosetting resin is used with a catalyst for generation of exothermic heat by the chemical reaction which results. Curing time can be one to twelve hours depending upon the particular thermosetting resin used.

Facsimile material 52 can also be a pre-preg material but will require the application of external heat. The term "pre-preg" is a term of art denoting preimpregnated unidirectional or bidirectional continuous filament fiber materials that may be temperature cured to provide a rigid composite material. A typical prepreg which can be used is Hercules Incorporated's magnamite prepreg-type 3501-AS. This is a graphite fiber epoxy and employs a thermosetting resin matrix that cures at approximately 350 degrees for a period of 30 minutes.

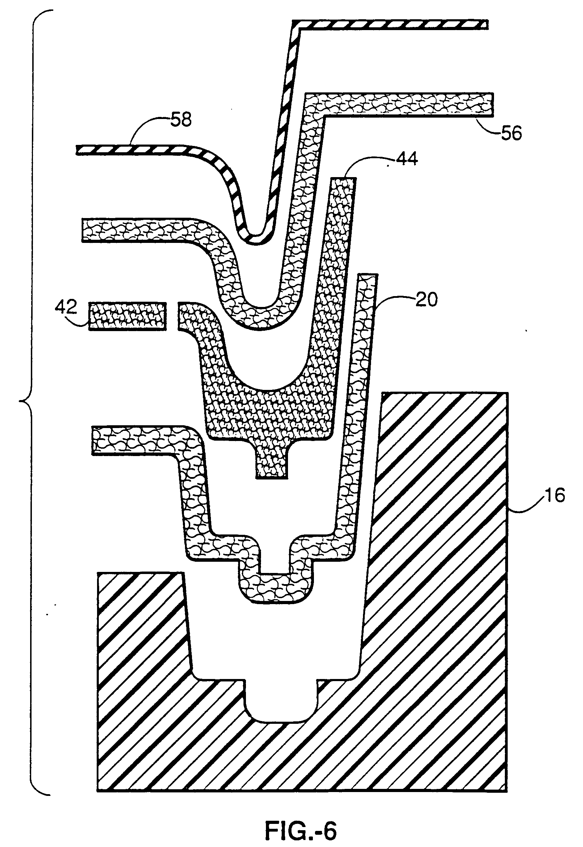

Referring now also to FIG. 6 and FIG. 7, once the facsimile material 52 is cured, the assembly is stripped apart and facsimile 20 is removed. Facsimile 20 has two surfaces, a lower or front surface 60 which has a topography which complements the topography of surface 22 of master model 16, and an upper or back surface 62 which has a topography which is substantially parallel to the topography of surface 22 of master model 16. This front and back definition is achievable only by the use of pressure pad 26, and the manner in which the back side of pressure pad 26 is adapted so that pressure applied to the back side will be uniformly transmitted to the front side of pressure pad 26. Referring again to FIG. 2, fillet 40 in the back side of pressure pad 26 is the basis of uniform pressure transmittal. When pressure is applied, rubber membrane 58 pushes against pressure pad 26 and stretches into its recesses, including fillet 40. By adapting the back side of pressure pad 26 to have shallow, rounded fillets, rubber membrane 58 can stretch into all of the recesses with pressure being applied uniformly. This would not be the case if the recesses were deep and narrow. Facsimile 20 will also be seen to have uniform wall thickness.

Accordingly, it will be seen that this invention can be used to produce carbon fiber facsimiles of heretofore unknown dimensional accuracies and rigidity. Although the description above contains many specificities, these should not be construed as limiting the scope of the invention but as merely providing illustrations of some of the presently preferred embodiments of this invention. Thus the scope of this invention should be determined by the appended claims.

## Claims

1. A process for producing resin-impregnated fibrous material facsimiles of a substantially uniform wall thickness, of physical objects, the process including the steps of:
(a) forming a master model (16) having a surface topography (22) to be duplicated or a complement of said surface topography (22);
(b) forming a pressure pad (26, 42, 44) on said master model (16), said pressure pad (26, 42, 44) having a first side and a second side, said first side having surface topography substantially complementing said surface topography (22) of said master model (16), said second side having surface topography for substantially uniform transmittal of pressure from said second side to said first side;
(c) removing said pressure pad (26, 42, 44) from said master model (16);
(d) placing a fibrous material (52) over said surface topography (22) of said master model (16);
(e) impregnating said fibrous material (52) with a thermosetting resin (50, 54);
(f) placing said first side of said pressure pad (26, 42, 44) over said fibrous material (52);
(g) applying pressure to said second side of said pressure pad (26, 42, 44);
(h) curing said resin-impregnated fibrous material (52); and
(i) removing a facsimile (20) from the surface of said master model (16), said facsimile (20) having a substantially uniform wall thickness.

2. The process recited in Claim 1, wherein said fibrous material (52) is selected from the group consisting of woven carbon fibers, woven aramid fibers, and woven glass fibers.

3. The process recited in any of the preceding claims, wherein after step (a) and before step (b) a parting agent is applied to surface topography (22) of said master model (16).

4. The process recited in any of the preceding claims, wherein after step (c) and before step (f) a parting agent is applied to said first side of said pressure pad (26, 42, 44).

5. The process recited in any of the preceding claims, wherein step (g) of applying pressure to said second side of said pressure pad (26, 42, 44) comprises applying positive atmospheric pressure.

6. The process recited in any of the preceding claims, wherein step (g) of applying pressure to said second side of said pressure pad (26, 42, 44) comprises applying physically applied pressure.

7. The process recited in any of the preceding claims, wherein the following steps occur after step (c) and before step (g):
(1) placing a breather cloth (56) over said second side of said pressure pad (26, 42, 44); and
(2) placing a rubber membrane (58) over said breather cloth (56).

8. The process recited in Claim 1, 4, 5, or 7, wherein:
said facsimiles (20) are carbon-fiber facsimiles (20);
said physical objects are sheet-metal components;
said fibrous material (52) in step (d) is a plurality of layers of carbon-fiber-based woven material; and
step (b) of forming said pressure pad (26, 42, 44)
further comprises the steps of:
placing a fibrous material (32) over said surface topography (22) of said master model (16), impregnating said fibrous material (32) with a thermosetting resin (28, 34), applying pressure to said fibrous material (32), curing said impregnated fibrous material (32), removing said cured fibrous material (32) from said master model (16), and filling and rounding any recesses (38) in said second side of said pressure pad (26, 42, 44) such that said second side is configured and structured for substantially uniform transmittal of pressure from said second side to said first side.

9. The process recited in Claim 1, wherein:
said facsimiles (20) are carbon-fiber facsimiles (20);
after step (c) and before step (d), a parting agent is applied to said surface of said master model (16);
said fibrous material (52) in step (d) is a plurality of layers of carbon-fiber weaves (52), the number of layers being determined by the desired thickness of said facsimile (20) to be produced;
said resin (50, 54) in step (e) is an epoxy;
said impregnation in step (e) comprises coating said plurality of layers of carbon-fiber weaves (52) with said epoxy, whereby an epoxy matrix is formed;
after step (c) and before step (f), said first side of said pressure pad (26, 42, 44) is coated with a parting agent;
said pressure pad (26, 42, 44) has openings through which excess epoxy can flow;
step (g) of applying pressure further comprises applying pressure to the nested assembly produced by the steps (d) through (g); and
said curing in step (h) is done with an exothermic catalyst.

10. The process recited in Claim 1, wherein:
said facsimiles (20) are carbon-fiber facsimiles (20);
the step (b) of forming said pressure pad (26, 42, 44) further comprises filling and rounding out any recesses (38) that exist so as to leave only shallow, gently curved fillets (40) to facilitate substantially uniform transmission of pressure from said second side to said first side of said pressure pad (26, 42, 44);
said fibrous material (52) in step (d) is a plurality of layers of carbon-fiber weaves (52), the number of layers being determined by the desired thickness of said facsimile (20) to be produced;
said resin (50, 54) in step (e) is an epoxy;
said impregnation in step (e) comprises coating said plurality of layers of carbon-fiber weaves (52) with said epoxy, whereby an epoxy matrix is formed;
the step (g) of applying pressure further comprises applying pressure to the nested assembly produced by the steps (d) through (g); and
said curing in step (h) is done with an exothermic catalyst.

11. The process recited in any of the preceding claims, wherein after step (h) and before step (i) said pressure pad (26, 42, 44) is removed from said facsimile (20).

## Patentansprüche

1. Verfahren zur Herstellung geharzter Faserstoff-Abformungen mit einer im wesentlichen gleichförmigen Wandstärke von körperlichen Gegenständen, welches Verfahren die Schritte umfaßt:
(a) Erzeugen eines Abformmodells (16) mit einer zu reproduzierenden Oberflächentopographie (22) oder einem Komplement der Oberflächentopographie (22);
(b) Erzeugen eines Preßkissens (26, 42, 44) auf dem Abformmodell (16), welches Preßkissen (26, 42, 44) eine erste Seite und eine zweite Seite aufweist, wobei die erste Seite eine Oberflächentopographie besitzt, die im wesentlichen zu der Oberflächentopographie (22) des Abformmodells (16) komplementär ist, wobei die zweite Seite eine Oberflächentopographie für eine weitgehend gleichförmige Druckübertragung von dieser zweiten Seite zu der ersten Seite aufweist;
(c) Abnehmen des Preßkissens (26, 42, 44) von dem Abformmodell (16);
(d) Auflegen eines Faserstoffes (52) auf der Oberflächentopographie (22) des Abformmodells (16);
(e) Harzen des Faserstoffes (52) mit einem warmhärtbaren Harz (50, 54);
(f) Auflegen der ersten Seite des Preßkissens (26, 42, 44) über dem Faserstoff (52);
(g) Aufbringen von Druck auf die zweite Seite des Preßkissens (26, 42, 44);
(h) Härten des geharzten Faserstoffes (52) und
(i) Abnehmen einer Abformung (20) der Oberflächentopographie (22) von der Oberfläche des Abformmodells (16), wobei die Abformung (20) eine im wesentlichen gleichförmige Wandstärke hat.

2. Verfahren nach Anspruch 1, bei welchem der Faserstoff (52) ausgewählt wird aus der Gruppe, bestehend aus Carbonfaser-Gewebe, Aramidfaser-Gewebe und Glasfaser-Gewebe.

3. Verfahren nach einem der vorgenannten Ansprüche, bei welchem nach Schritt (a) und vor Schritt (b) auf die Oberflächentopographie (22) des Abformmodells (16) ein Trennmittel aufgebracht wird.

4. Verfahren nach einem der vorgenannten Ansprüche, bei welchem nach Schritt (c) und vor Schritt (f) auf die erste Seite des Preßkissens (26, 42, 44) ein Trennmittel aufgebracht wird.

5. Verfahren nach einem der Vorgenannten Ansprüche, bei welchem Schritt (g) zum Aufbringen von Druck auf die zweite Seite des Preßkissens (25, 42, 44) das Anlegen von Überdruck umfaßt.

6. Verfahren nach einem der vorgenannten Ansprüche, bei welchem Schritt (g) zum Aufbringen von Druck auf die zweite Seite des Preßkissens (26, 42, 44) das Anlegen von physisch aufgebrachtem Druck umfaßt.

7. Verfahren nach einem der vorgenannten Ansprüche, bei welchem die folgenden Schritte nach Schritt (c) und vor Schritt (g) vorgenommen werden:
(1) Auflegen eines Ausgleichstuches (56) auf die zweite Seite des Preßkissens (26, 42, 44); sowie
(2) Auflegen einer Gummimembran (58) auf das Ausgleichstuch (56).

8. Verfahren nach Anspruch 1, 4, 5 oder 7, worin:
die Abformungen (20) Carbonfaser-Abformungen (20) sind;
die körperlichen Gegenstände Metallblech-Komponenten sind;
der Faserstoff (52) in Schritt (d) eine Vielzahl von Lagen eines Gewebes auf Basis von Carbonfasern ist;
und Schritt (b) zum Erzeugen des Preßkissens (26, 42, 44) ferner die Schritte umfaßt:
Auflegen eines Faserstoffes (32) auf die Oberflächentopographie (22) des Abformmodells (16), Harzen des Faserstoffes (32) mit einem warmhärtbaren Harz (28, 34), Aufbringen von Druck auf den Faserstoff (32), Härten des geharzten Faserstoffes (32), Abnehmen des gehärteten Faserstoffes (32) von dem Abformmodell (16) und Füllen und Runden aller Vertiefungen (38) in der zweiten Seite des Preßkissens (26, 42, 44) derart, daß die zweite Seite für eine im wesentlichen gleichförmige Druckübertragung von der zweiten Seiten zu der ersten Seite konfiguriert und strukturiert ist.

9. Verfahren nach Anspruch 1, bei welchem:
die Abformungen (20) Carbonfaser-Abformungen (20) sind; nach Schritt (c) und vor Schritt (d) ein Trennmittel auf die Oberfläche des Abformmodells (16) aufgebracht wird;
der Faserstoff (52) in Schritt (d) eine Vielzahl von Lagen von Carbonfaser-Gewebe (52) ist, wobei die Zahl der Lagen festgelegt wird durch die angestrebte Dicke der zu erzeugenden Abformung (20);
das Harz (50, 54) in Schritt (e) ein Epoxid-Harz ist;
das Harzen in Schritt (e) das Beschichten der Vielzahl der Lagen der Carbonfaser-Gewebe (52) mit dem Epoxid-Harz umfaßt, wodurch eine Epoxidharz-Matrix erzeugt wird;
nach Schritt (c) und vor Schritt (f) die erste Seite des Preßkissens (26, 42, 44) mit einem Trennmittel überzogen wird;
das Preßkissen (26, 42, 44) über Öffnungen verfügt, durch die überschüssiges Epoxid-Harz fließen kann;
Schritt (g) zum Aufbringen von Druck ferner das Anlegen von Druck an die durch die Schritte (d) bis (g) erzeugte ineinandergreifende Anordnung umfaßt; sowie
das Härten in Schritt (h) mit einem exothermen Katalysator ausgeführt wird.

10. Verfahren nach Anspruch 1, bei welchem:
die Abformungen (20) Carbonfaser-Abformungen (20) sind;
der Schritt (b) zum Erzeugen des Preßkissens (26, 42, 44) ferner das Füllen und Runden aller bestehenden Vertiefungen (38) umfaßt, um lediglich flache, leicht gekrümmte Abrundungen von Übergängen verbleiben, um eine im wesentlichen gleichförmige Druckübertragung von der zweiten Seite zu der ersten Seite des Preßkissens (26, 42, 44) zu erleichtern;
der Faserstoff (52) in Schritt (d) eine Vielzahl von Lagen von Carbonfaser-Geweben (52) ist, wobei die Zahl der Lagen festgelegt wird durch die angestrebte Dicke der zu erzeugenden Abformung (20);
das Harz (50, 54) in Schritt (e) ein Epoxid-Harz ist;
das Harzen in Schritt (e) das Beschichten der Vielzahl der Lagen der Carbonfaser-Gewebe (52) mit dem Epoxid-Harz umfaßt, wodurch eine Epoxidharz-Matrix erzeugt wird;
der Schritt (g) zum Aufbringen von Druck ferner das Anlegen von Druck an die durch die Schritte (d) bis (g) erzeugte ineinandergreifende Anordnung umfaßt; und
das Härten in Schritt (h) mit einem exothermen Katalysator erfolgt.

11. Verfahren nach einem der vorgenannten Ansprüche, bei welchem nach Schritt (h) und vor Schritt (i) das Preßkissen (26, 42, 44) von der Abformung (20) abgenommen wird.

## Revendications

1. Procédé de fabrication de fac-similés de matière fibreuse imprégnée de résine, d'épaisseur de paroi sensiblement uniforme, d'object physiques, le procédé incluant les étapes de:
(a) formation d'un modèle-maître (16) ayant une topographie de surface (22) à reproduire, ou d'un complément de ladite topographie de surface (22);
(b) formation d'un tampon de pression (26, 42, 44) sur ledit modèle-maître (16), ledit tampon de pression (26, 42, 44) ayant un premier côté et un second côté, ledit premier côté ayant une topographie de surface représentant sensiblement le complément de ladite topographie de surface (22) dudit modèle-maître (16), ledit second côté ayant une topographie de surface permettant la transmission sensiblement uniforme d'une pression dudit second côté audit premier côté;
(c) enlèvement dudit tampon de pression (26, 42, 44) dudit modèle-maître (16);
(d) mise en place d'une matière fibreuse (52) sur ladite topographie de surface (22) dudit modèle-maître (16);
(e) imprégnation de ladite matière fibreuse (52) avec une résine thermodurcissable (50, 54);
(f) mise en place dudit premier côté dudit tampon de pression (26, 42, 44) sur ladite matière fibreuse (52);
(g) application d'une pression sur ledit second côté dudit tampon de pression (26, 42, 44);
(h) durcissement de ladite matière fibreuse imprégnée de résine (52);
et
(i) enlèvement d'un fac-similé (20) de la surface dudit modèle-maître (16), ledit fac-similé (20) ayant une épaisseur de paroi sensiblement uniforme.

2. Procédé selon la revendication 1, dans lequel ladite matière fibreuse (52) est choisie dans le groupe constitué par les fibres de carbone tissées, les fibres d'aramide tissées et les fibres de verre tissées.

3. Procédé selon l'une quelconque des revendications précédentes, dans lequel après l'étape (a) et avant l'étape (b) un agent de séparation est appliqué à la topographie de surface (22) dudit modèle-maître (16).

4. Procédé selon l'une quelconque des revendications précédentes, dans lequel après l'étape (c) et avant l'étape (f) un agent de séparation est appliqué audit premier côté dudit tampon de pression (26, 42, 44).

5. Procédé selon l'une quelconque des revendications précédentes, dans lequel l'étape (g) de l'application d'une pression audit second côté dudit tampon de pression (26, 42, 44) comprend l'application d'une pression atmosphérique positive.

6. Procédé selon l'une quelconque des revendications précédentes, dans lequel l'étape (g) d'application d'une pression audit second côté dudit tampon de pression (26, 42, 44) comprend l'application d'une pression physiquement exercée.

7. Procédé selon l'une quelconque des revendications précédentes, dans lequel sont effectuées les étapes suivantes après l'étape (c) et avant l'étape (g):
(1) mise en place d'un tissu de respiration (56) sur ledit second côté dudit tampon de pression (26, 42, 44); et
(2) mise en place d'une membrane de caoutchouc (58) sur ledit tissu de respiration (56).

8. Procédé selon la revendication 1, 4, 5 ou 7, dans lequel:
lesdits fac-similés sont des fac-similés de fibre de carbone (20);
lesdits objets physiques sont des composants de tôle métallique;
ladite matière fibreuse (52) dans l'étape (d) est constituée de plusieurs couches de matière tissée à base de fibre de carbone; et
l'étape (b) de formation dudit tampon de pression (26, 42, 44) comprend en outre les étapes de:
mise en place d'une matière fibreuse (32) sur ladite topographie de surface (22) dudit modèle-maître (16), imprégnation de ladite matière fibreuse (32) avec une résine thermodurcissable (28, 34), application d'une pression à ladite matière fibreuse (32), durcissement de ladite matière fibreuse imprégnée (32), enlèvement de ladite matière fibreuse durcie (32) dudit modèle-maître (16), et remplissage et arrondissement des éventuelles cavités (38) dans ledit second côté dudit tampon de pression (26, 42, 44) de manière que ledit second côté soit configuré et structuré en vue d'une transmission sensiblement uniforme de pression dudit second côté audit premier côté.

9. Procédé selon la revendication 1, dans lequel:
lesdits fac-similés (20) sont des fac-similés en fibre de carbone (20);
après l'étape (c) et avant l'étape (d), un agent de séparation est appliqué à ladite surface dudit modèlemaître (16);
ladite matière fibreuse (52) dans l'étape (d) est constituée de plusieurs couches d'armures de fibres de carbone (52), le nombre de couches étant déterminé par l'épaisseur désirée dudit fac-similé (20) à produire;
ladite résine (50, 54) dans l'étape (e) est une époxyde;
ladite imprégnation dans l'étape (e) comprend le revêtement desdites plusieurs couches d'armures de fibres de carbone (52) avec ladite époxyde, ce qui fait qu'une matrice d'époxyde est formée;
après l'étape (c) et avant l'étape (f), ledit premier côté dudit tampon de pression (26, 42, 44) est revêtu d'un agent de séparation;
ledit tampon de pression (26, 42, 44) possède des ouvertures à travers lesquelles l'exccès d'époxyde peut s'écouler;
l'étape (g) de l'application d'une pression comprend en outre l'application d'une pression à l'assemblage emboîté produit par les étapes (d) à (g); et
ledit durcissement dans l'étape (h) est effectué avec un catalyseur exothermique.

10. Procédé de la revendication 1, dans lequel:
lesdits fac-similés (20) sont des fac-similés en fibre de carbone (20);
l'étape (b) de formation dudit tampon de pression (26, 42, 44) comprend en outre le remplissage et l'arrondissement des éventuelles cavités (38) qui existent de manière à ne laisser que des congés peu profonds et doucement incurvés (40) pour faciliter une transmission sensiblement uniforme de la pression dudit second côté audit premier côté dudit tampon de pression (26, 42, 44);
ladite matière fibreuse 52) dans l'étape (d) est constituée de plusieurs couches d'armures en fibre de carbone (52), le nombre de couches étant déterminé par l'épaisseur désirée dudit fac-similé (20) à produire;
ladite résine (50, 54) dans l'étape (e) est une époxyde;
ladite imprégnation dans l'étape (e) comprend le revêtement de ladite pluralité de couches d'armures de fibre de carbone (52) avec ladite époxyde, ce qui fait qu'il se forme une matrice d'époxyde;
l'étape (g) d'application d'une pression comprend en outre l'application d'une pression à l'assemblage emboîté produit par les étapes (d) à (g); et
ledit durcissement dans l'étape (h) est effectué avec un catalyseur exothermique.

11. Procédé selon l'une quelconque des revendications précédentes, dans lequel après l'étape (h) et avant l'étape (i) ledit tampon de pression (26, 42, 44) est retiré dudit fac-similé (20).
